# EUROPÄISCHE PATENTSCHRIFT

(11) **EP 2 431 637 B1**
(45) Veröffentlichungstag und Bekanntmachung des Hinweises auf die Patenterteilung: **05.12.2012**
(21) Anmeldenummer: 11168152.4
(22) Anmeldetag: 31.05.2011
(51) Int. Cl.: F16H 63/32

(54) **Anordnung einer Schaltstange mit einer Schaltgabel**
Assembly of a control rod with a shift fork
Agencement d'une tige de commutation dotée d'une fourchette de changement de vitesse

(30) Priorität: 17.09.2010 DE 102010045873
(43) Veröffentlichungstag der Anmeldung: 21.03.2012
(73) Patentinhaber: Schaeffler Technologies AG & Co. KG, 91074 Herzogenaurach (DE)
(72) Erfinder: Feuerbach, Matthias, 97070 Würzburg (DE); Krämer, Klaus, 91438 Lenkersheim (DE); Schwarz, Uwe, 91052 Erlangen (DE)

(56) Entgegenhaltungen:
- DE-A1- 10 159 441
- DE-A1- 10 236 594
- DE-C1- 19 940 628

## Beschreibung

Die Erfindung betrifft eine Schaltvorrichtung mit einer Schaltgabel und einer Schaltstange, die gelenkig miteinander verbunden sind.

### Hintergrund der Erfindung

Eine derartige Schaltvorrichtung ist aus DE 199 40 628 C1 bekannt. Die Schaltvorrichtung weist eine Schaltgabel auf, welche über eine Öffnung auf einer Schaltstange angeordnet ist. Eine Stiftverbindung hält die Schaltgabel relativ zur Schaltstange fest. Die Schaltstange und die Schaltgabel ist im Bereich der Öffnung abgeflacht. Die Schaltgabel und die Schaltstange sind geringfügig verschwenkbar ausgebildet. Die Schaltmuffe unterliegt Taumelbewegungen, welche durch die Schaltgabel an die Schaltstange vermittelt werden. Das Verschwenken gleicht die Taumelbewegungen aus. Aufgrund der individuellen Bauweisen der Schaltgabeln und der Schaltstangen, muss auch jede gelenkige Verbindung individuell ausgeführt sein. Diese Teilevielfalt erhöht den Fertigungsaufwand und die Logistik. Aufgrund der Abflachungen an der Schaltgabel ist es notwendig, die Schaltgabel seitlich zur Schaltstange zuzuführen. Dabei ist ein offener Querschnitt der Öffnung an der Schaltgabel erforderlich, welcher an Stabilität verliert. Die Schaltstange ist durch die Abflachungen lokal geschwächt, was sich nachteilig auf die Stabilität auswirkt.

Aufgabe der Erfindung ist es daher, eine für die Massenfertigung geeignete Schaltvorrichtung zu schaffen, die Taumelbewegungen der Schaltmuffe ausgleicht und hohe Momente aufnehmen kann.

Erfindungsgemäß wird diese Aufgabe dadurch gelöst, dass eine Schaltvorrichtung nach dem Oberbegriff des Anspruchs 1 mehrere Distanzstücke mit planen Flächen aufweist, die sich an planen Gegenflächen abstützen und gegenüber diesen verschiebbar sind.

Schaltstangen, darunter sind auch Schaltschienen oder Schaltwellen zu verstehen, werden in Getrieben zur Übertragung von Schalt- oder Wählbewegungen eingesetzt. Auf den Schaltstangen sind die Schaltgabeln verschwenkbeweglich über ein Gelenk in der Öffnung der Schaltgabel angeordnet. Die Gelenkachse bildet ein Stift, welcher die Schaltgabel mit der Schaltstange verbindet. Über die Stiftachse ist eine Verschwenkbewegung möglich, die Taumelbewegungen von der Schaltmuffe zur Schaltstange ausgleicht.

Erfindungsgemäß werden zwischen der Schaltgabelöffnung und dem Schaltstange mehrere Distanzstücke angeordnet. Zwischen Schaltgabelöffnung und Schaltstange ist ein radialer Zwischenraum, der über diese Distanzstücke lokal überbrückt wird. Die Distanzstücke können dabei auch von der Stiftverbindung durchdrungen sein. Die Distanzstücke besitzen plane Flächen und gewölbte Flächen. Die planen Flächen stehen in Kontakt mit komplementären planen Flächen oder Abflachungen, welche an dem Schaltstange angeordnet sind. Die gewölbten Flächen stehen in formschlüssigen Kontakt mit der Schaltgabelöffnung. Bei einer Verschwenkbewegung der Schaltgabel werden die Distanzstücke über ihre gewölbten Flächen mitgenommen, können jedoch an ihren planen Flächen mit den Abflachungen abscheren. Durch den hohen verbleibenden Flächenkontakt bei einem bestimmten Verschwenkwinkel können höhere Kräfte aufgenommen werden. Somit verstärken die Distanzstücke vorteilhafterweise das Gelenk.

Weiterhin können auf den Distanzstücken Beschichtungen zur Verschleißminimierung vorgesehen werden. Der Herstellungsaufwand ist bei den einfachen Distanzstücken gering. Vorteilhaft für die Funktion ist hierbei, dass bei geringem Schwenkwinkel viel Kontaktfläche zur Führung der Schwenkbewegung verbleibt.

In einem nicht beanspruchten Ausführungsbeispiel kann auch auf der Schaltstange eine konkav oder konvex gewölbte Fläche angeordnet sein, die die gewölbten Flächen der Distanzstücke aufnimmt. Dabei sollte die Schaltgabelöffnung die komplementären planen Flächen zu den planen Flächen der Distanzstücke aufweisen.

Erfindungsgemäß können die Distanzstücke zwei zueinander planparallele Flächen aufweisen. Die Distanzstücke sind mit ihrer einfachen Form von Quadern oder Würfeln leicht herzustellen.

In einer weiterführenden Ausbildung der Erfindung erstrecken sich die Distanzstücke in Axialrichtung der Schaltstange. Die Schaltgabelöffnung ist entsprechend lang gefasst, um die Distanzstücke einzuhüllen. Durch die verlängerte Abstützung wird das Gelenk in den verbleibenden gesperrten Freiheitsgraden verstärkt ausgebildet, was sich vorteilhaft auf die Lebensdauer auswirkt.

Alternativ können mehrere kleinere Distanzstücke seriell in Axialrichtung der Schaltstange angeordnet werden, um die Kontaktfläche zu erhöhen. Dabei müssen die Distanzstücke nicht von der Stiftverbindung durchdrungen werden. Dies ist vorteilhaft, um Herstellkosten durch das Ausbilden von Stiftaufnahmelöchern an den Distanzstücken zu sparen.

In einer weiteren Ausbildung der Erfindung sind die Distanzstücke derart angeordnet, dass der Umfang der Schaltstange zur Aufnahme der Schaltgabel mit der Schaltgabelöffnung vergrößert wird. Das Gelenk weist dabei zwei oder mehrere sich päarchenweise gegenüberliegende Distanzstücke auf. Damit wird die momentenübertragende Fläche im Gelenk vergrößert und kann höheren Belastungen standhalten.

Ein weiterer Vorteil der Umfangsvergrößerung durch die Distanzstücke ist, dass sich eine weitere Montagemöglichkeit erschließt. Die Distanzstücke können auf den Abflachungen der Schaltstange angeordnet werden, während die Schaltgabel mit ihrer Öffnung, die größer ist als der größte Umfang der Schaltstange, fluchtend entlang der Schaltstange montiert wird.

Eine weitere vorteilhafte Ausbildung der Erfindung stellt eine symmetrische Anordnung der Distanzstücke auf dem Schaltstange dar. Durch die symmetrische Anordnung unterliegt das Gelenk weitestgehend einer wechselnden Belastung. Somit werden die vorzeichenbehafteten Belastungen im geringen Bauraum optimal aufgenommen. Durch die vorteilhafte symmetrische Ausbildung wird die Lebensdauer erhöht. Alternativ kann bei einer gezielten unsymmetrischen Anordnung der Distanzstücke an dem Schaltstange auf unterschiedliche Belastungshöhen reagiert werden.

Erfindungsgemäß sind die Distanzstücke identisch ausgebildet. Dadurch ist kein Zupaaren erforderlich, so dass die Montage weiter vereinfacht wird. Ebenfalls wird ein Sortieren für die Montage vermieden und der Aufwand reduziert.

Vorteilhafterweise können für die Distanzstücke verschiedenste Materialien oder lebensdauerverlängernde Beschichtungen ausgebildet werden. Dies vermeidet eine teure Anordnung verschleißfester Materialien an Schaltgabel oder Schaltstange sowie eine komplette Ausbildung der Schaltgabel oder Schaltstange durch solche Werkstoffe.

In einer vorteilhaften Ausgestaltung der Erfindung sind die Abflachungen an der Schaltstange parallel ausgebildet. Die Distanzstücke weisen hierbei in Längsrichtung einen konstanten Querschnitt auf. Diese planparallele Ausbildung vereinfacht die Montage der Distanzstücke an der Schaltstange.

Alternativ können die Abflachungen auf der Schaltstange nicht planparallel ausgebildet sein. Dabei erstrecken sich die Flächen in Längsachse der Schaltstange konisch aufeinander zu oder voneinander weg. Die planen Flächen an den Distanzstücken sind ebenfalls konisch ausgebildet und verjüngen oder verbreitern den Querschnitt. In dieser Ausbildung können Toleranzanforderungen an die Flächen grob angegeben werden. Eine Parallelisierung der Mittelachsen von Schaltgabelöffnung und Schaltstange kann durch Zupaaren der Distanzstücke zum jeweiligen Ist-Stand stattfinden. Alternativ können auch Abflachungen an der Schaltgabel die Schaltgabelöffnung verjüngen oder verbreitern.

Die konische Ausbildung in Längsrichtung ist unter Belastung vorteilhaft, dass bei Krafteinleitung in Längsrichtung der Schaltstange die Distanzstücke keilig verspannend mit der Schaltgabelöffnung wirken. Die Distanzstücke unterstützen die Aufnahme axialer Kräfte im Gelenk. Bei einem Einrasten der Schaltstange in ein Rastelement erfolgt ein geringer Rückweg, der die Keilverbindung wieder entlastet, damit das Gelenk die Taumelbewegung der im Eingriff befindlichen Schaltmuffe ausgleichen kann.

Eine weitere vorteilhafte Ausbildung der Erfindung stellt eine Koaxialität der Mittelachse der Schaltgabelöffnung und der Mittelachse der Schaltstange dar. Durch die Distanzstücke und deren Höhen können die Mittelachsen vorteilhafterweise fluchtend ausgebildet werden. Dies kann durch eine Zusortierung der entsprechenden Distanzstücke mit deren verschiedenen Höhen erfolgen. Sofern keine Mittelachse aufgrund eines nicht vorhandenen kreisförmigen Querschnittes definiert werden kann, können über die Distanzstücke die radialen Abstände zwischen der Schaltgabelöffnung und der Schaltstange eingestellt werden. Eine weitestgehend symmetrische Anordnung hat Vorteile bei der Minimierung möglicher Kippmomente durch die axiale Bewegung der Schaltstange auf die Schaltgabel.

Die Erfindung sieht eine weitere vorteilhafte Ausgestaltung derart vor, dass ein Radius am Umfang des Distanzstückes gleich dem Radius in der Aufnahme der Schaltgabelöffnung ist. Bei einer Verdrehbewegung der Schaltgabel um die Längsachse der Schaltstange können dadurch Kräfte über eine größtmögliche Fläche zwischen der Schaltgabel und dem Distanzstück übertragen werden. Durch die Schmiegung wird die Stiftverbindung entlastet.

In einer Ausgestaltung der Erfindung ist die Schaltgabelöffnung umfangsseitig geschlossen ausgebildet. Für eine Leichtbauweise kann die Schaltgabelöffnung alternativ an diskreten Stellen umfangsseitig geschlossen sein. Durchbrüche, die einen Teil des Gelenkes freilegen sind vorteilhaft für die Zugängigkeit der Schmierung des Gelenkes, was die Lebensdauer erhöht. Eine vollständig über die gesamte Länge hinweg umfangsseitig geschlossene Schaltgabelöffnung stellt die maximale Stabilität zur Verfügung.

Durch die erfindungsgemäßen Ausgestaltungen der Distanzstücke und deren Anordnung mit der Verbindung zwischen Schaltgabelöffnung und Schaltstange lässt sich ein Verschwenkgelenk in der Massenfertigung herstellen.

Kurze Beschreibung der Zeichnungen Ausführungsbeispiele der Erfindung sind in den Figuren dargestellt.

### Es zeigen:

- Fig. 1: einen Längsschnitt durch eine Anordnung mit einer Schaltstange und balligen Distanzstücken,
- Fig. 2: einen Querschnitt durch die Anordnung nach Fig. 1,
- Fig. 3: einen Querschnitt durch eine weitere nicht beanspruchte Anordnung mit einer Schaltschiene und quaderförmigen Distanzstücken,
- Fig. 4: einen Querschnitt durch eine weitere nicht beanspruchte Anordnungsform mit einer Schaltschiene und gewölbten Distanzstücken,
- Fig. 5: einen Querschnitt durch eine weitere nicht beanspruchte Anordnung mit einer Schaltstange und mehreren miteinander verbundenen konvexen Distanzstücken und
- Fig. 6: einen Längsschnitt durch eine weitere Anordnung mit einer Schaltstange und mehreren seriell angeordneten Distanzstücken.

### Detaillierte Beschreibung der Zeichnungen

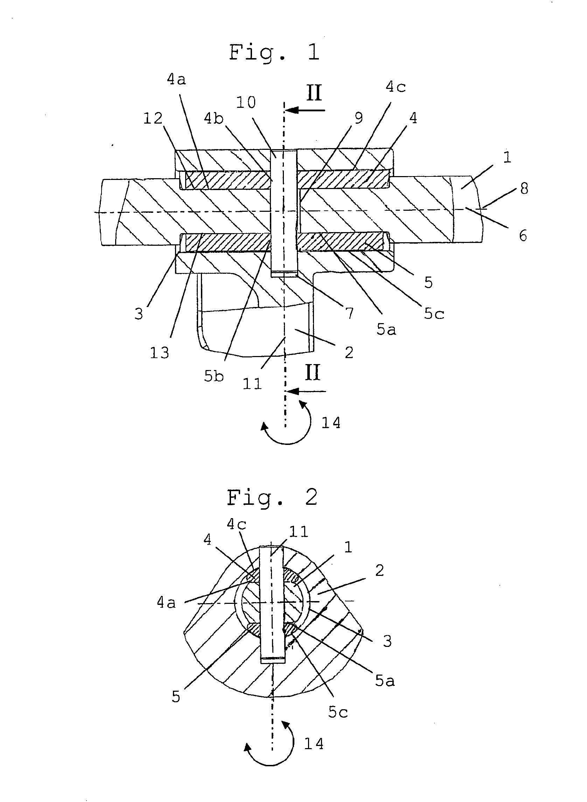

In Fig. 1 ist eine Anordnung mit einer Schaltstange 1 und einer Schaltgabel 2 dargestellt. Die Schaltgabel 2 hat eine kreisförmige Durchgangsöffnung 3 in denen sich zwei Distanzstücke 4, 5 befinden. Die Schaltgabel 2 weist mittig und senkrecht zu ihrer Mittelachse 6 eine Sacklochbohrung 7 auf. Die Schaltstange 1 weist ebenfalls senkrecht zu ihrer Mittelachse 8 eine Bohrung 9 auf. Die Distanzstücke 4, 5 weisen jeweils eine gelenkig wirkende plane Fläche 4a, 5a auf. Weiterhin weisen die Distanzstücke 4, 5 mittig jeweils eine Durchgangsbohrung 4b, 5b auf. Die Bohrungen 7, 9, 4b, 5b sind fluchtend angeordnet. Durch die Bohrungen 7, 9, 4b, 5b ist ein Stift 10 durchgesteckt. Dieser Stift 10 bildet die Verschwenkachse 11. Die Bohrung 9 ist in ihrem Durchmesser größer als der Durchmesser des Stifts 10. Die Schaltstange 1 weist Abflachungen 12, 13 auf, die gleich tief ausgebildet sind. Die Länge der Abflachungen 12, 13 ist ebenfalls gleich. Die Abflachungen 12, 13 sind symmetrisch zur Mittelachse 8 der Schaltstange 1 ausgebildet. Die Abflachungen 12, 13 stehen in Kontakt mit planen Flächen 4a, 5a. Auf der Gegenseite der jeweiligen planen Flächen 4a, 5a ist jeweils eine Fläche 4c, 5c in Kontakt mit der Durchgangsöffnung 3 der Schaltgabel 2. Bei einer Verschwenkbewegung 14 um die Verschwenkachse 11 gleiten die Flächen 4a, 5a an den Abflachungen 12, 13 ab. Die Distanzstücke 4, 5 weisen eine identische Höhe auf.

In Fig. 2 ist ein Querschnitt aus Fig. 1 zu sehen. Zwischen der Schaltgabel 2 und der Schaltstange 1 ist ein radialer Abstand, der von den Distanzstücken 4, 5 bestimmt wird. Dabei hat die gewölbte Fläche 4c, 5c der Distanzstücke 4, 5 den gleichen Radius, wie die kreisförmige Durchgangsöffnung 3 der Schaltgabel 2. Die beiden Distanzstücke 4, 5 sind in ihrer Querschnittsform identisch. Dabei weisen beide Distanzstücke 4, 5 am Übergang der jeweiligen Flächen 4a zu 4c bzw. 5a zu 5c eine Abrundung auf.

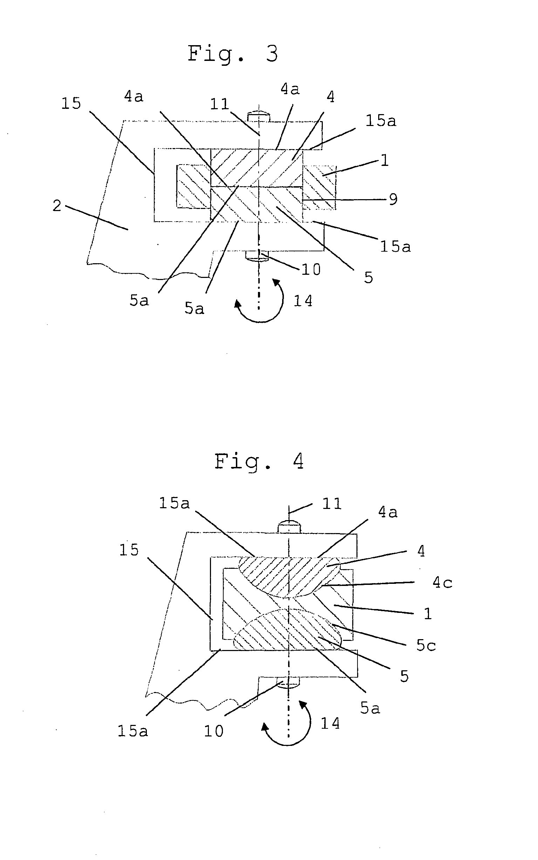

Fig. 3 zeigt einen Querschnitt durch eine weitere Schaltgabel 2. Diese Schaltgabel 2 hat eine klauenartige Öffnung 15 mit zwei gegenüberliegenden planparallelen Flächen 15a. In der Öffnung 15 befindet sich eine Schaltstange 1, welche zwei Distanzstücke 4, 5 umfasst. Die beiden Distanzstücke 4, 5 weisen einen rechteckigen Querschnitt auf. Höhe und Breite der Distanzstücke 4, 5 ist identisch. Dabei kontaktieren die Distanzstücke 4, 5 mit den planen Flächen 4a, 5a einander. Die jeweiligen gegenüberliegenden planen Flächen 4a, 5a kontaktieren die entsprechenden Anlageflächen 15a. Die Schaltstange 1 weist eine Durchgangsöffnung 9 auf, in der sich die Distanzstücke 4, 5 befinden. Die Verschwenkachse 11 wird wiederum durch einen Stift 10 gebildet, welche die Schaltgabel 2, die Schaltstange 1 und die beiden Distanzstücken 4, 5 durchdringt. Bei einer Verschwenkbewegung 14 scheren die Flächen 4a, 5a mit 15a ab.

Fig. 4 zeigt eine ähnliche Anordnung wie Fig. 3, jedoch weisen die Distanzstücke 4, 5 einen von Fig. 3 verschiedenen Querschnitt auf. Die Distanzstücke 4, 5 haben jeweils eine plane Fläche 4a, 5a, welche mit den jeweiligen Flächen 15a in Kontakt stehen und abscheren. In dieser Anordnung weist die Schaltstange 1 keine Durchgangsöffnung für die Distanzstücke 4, 5 auf. Mit der Schaltstange 1 stehen die gewölbten Flächen 4c, 5c der Distanzstücke 4, 5 in Kontakt. Die Verschwenkbewegung 14 erfolgt über eine Stiftverbindung mit einem Stift 10 um die Verschwenkachse 11.

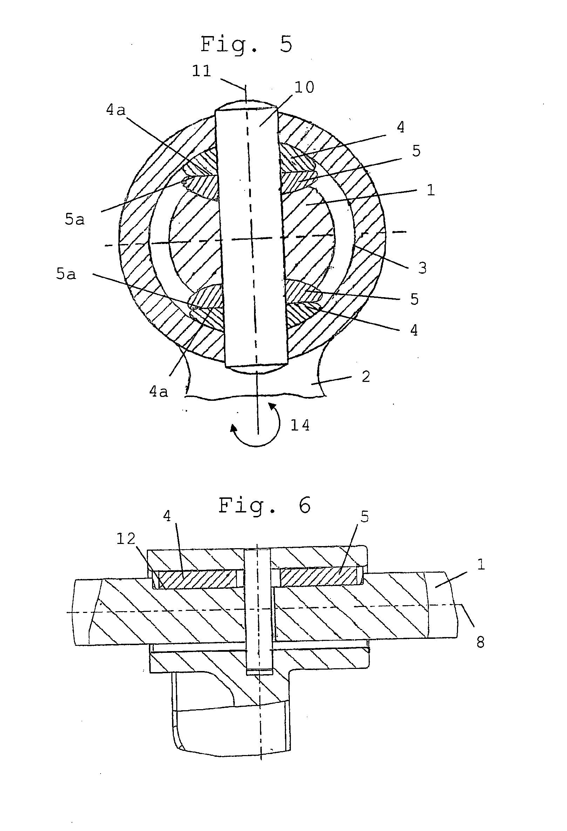

Fig. 5 zeigt einen Querschnitt durch eine Verbindung einer Schaltgabel 2 mit einer Schaltstange 1. Die Schaltgabel 2 weist hierbei eine kreisrunde Durchgangsöffnung 3 auf. Zwischen Schaltgabel 2 und Schaltstange 1 sind Distanzstücke 4, 5 angeordnet. Die Distanzstücke 4, 5 sind hier gedoppelt angeordnet. Über diese Distanzstücke 4, 5 ist ein radialer Abstand zwischen Schaltstange 1 und Durchgangsöffnung 3 gewährleistet. Die Anordnung wird von einem Stift 10 durchdrungen, welcher eine Verschwenkachse 11 aufweist. Bei einer Verschwenkbewegung 14 um die Verschwenkachse 11 scheren die planen Flächen 4a mit 5a der Distanzstücke 4, 5 aufeinander ab. Die Distanzstücke 4, 5, sind identisch in ihrem Querschnitt und weisen gegenüberliegend ihrer planen Flächen 4a, 5a eine gewölbte Fläche 4c, 5c auf. Diese gewölbten Flächen stehen mit der Schaltstange 1 oder der Durchgangsöffnung 3 der Schaltgabel 2 in Kontakt.

Fig. 6 zeigt eine Anordnung basierend auf Fig. 1 wobei jedoch die Schaltstange 1 eine Abflachung 12 aufweist. Auf dieser Abflachung 12 sind zwei Distanzstücke 4, 5 seriell ineinander angeordnet. Diese beiden Distanzstücke 4, 5 sind identisch ausgebildet. In dieser Anordnung können auch die beiden Distanzstücke **4**, 5 spiegelbildlich zur Mittelachse 8 auf der Gegenseite zusätzliche identische Distanzstücke aufweisen.

### Liste der Bezugszahlen

- 1): Schaltstange
- 2): Schaltgabel
- 3): Durchgangsöffnung
- 4): Distanzstück
- 4a): plane Fläche
- 4b): Durchgangsbohrung
- 4c): gewölbte Fläche
- 5): Distanzstück
- 5a): plane Fläche
- 5b): Durchgangsbohrung
- 5c): gewölbte Fläche
- 6): Mittelachse (Schaltgabel)
- 7): Sacklochbohrung
- 8): Mittelachse (Schaltstange)
- 9): Durchgangsöffnung 10) Stift 11)Verschwenkachse 12)Abflachung 13)Abflachung 14)Verschwenkbewegung 15)klauenartige Öffnung
- 15a): planparallele Fläche

## Patentansprüche

1. Schaltvorrichtung mit einer Schaltstange (1) und einer Schaltgabel (2), wobei die Schaltstange (1) in einer Öffnung (3) der Schaltgabel (2) angeordnet ist und zwischen der Schaltstange (1) und der Schaltgabel (2) ein Zwischenraum verbleibt, **dadurch gekennzeichnet, dass** in dem Zwischenraum mehrere Distanzstücke (4, 5) angeordnet sind, die gelenkig wirkende plane Flächen (4a, 5a) zur Ausbildung eines Flächenkontaktes mit der Schaltstange (1) aufweisen.

2. Schaltvorrichtung nach Anspruch 1, **dadurch gekennzeichnet, dass** die Schaltstange (1) gelenkig wirkende Abflachungen (12, 13) aufweist.

3. Schaltvorrichtung nach Anspruch 1, **dadurch gekennzeichnet, dass** die Distanzstücke (4, 5) in Längsrichtung der Schaltstange (1) die größte Dimension aufweisen.

4. Schaltvorrichtung nach Anspruch 1; **dadurch gekennzeichnet, dass** die Distanzstücke (4, 5) den Umfang der Schaltstange (1) vergrößern.

5. Schaltvorrichtung nach Anspruch 1, **dadurch gekennzeichnet, dass** die Schaltgabel (2) eine umfangsseitig vollständig geschlossene Öffnung (3) aufweist.

6. Schaltvorrichtung nach Anspruch 1, **dadurch gekennzeichnet, dass** die Schaltstange (1), die Schaltgabel (2) und Distanzstücke (4, 5) von einem Stift durchdrungen sind.

7. Schaltvorrichtung nach Anspruch 1, **dadurch gekennzeichnet, dass** die Distanzstücke (4, 5) symmetrisch auf der Schaltstange (1) angeordnet sind.

8. Schaltvorrichtung nach Anspruch 1, **dadurch gekennzeichnet, dass** die Distanzstücke (4, 5) identisch sind.

9. Schaltvorrichtung nach Anspruch 1, **dadurch gekennzeichnet, dass** die planen Flächen (4a, 5a) der Distanzstücke (4, 5) planparallel zueinander sind.

10. Schaltvorrichtung nach Anspruch 1, **dadurch gekennzeichnet, dass** die Schaltgabel (2) axialbeweglich auf der Schaltstange (1) angeordnet ist.

11. Schaltvorrichtung nach Anspruch 1, **dadurch gekennzeichnet, dass** zur Maximierung der Kontaktfläche zwischen der Schaltgabel (2) und den Distanzstücken (4, 5) eine Krümmung einer gewölbten Fläche (4c, 5c) des Distanzstückes (4, 5) und eine Krümmung der Öffnung (3) gleich groß ist.

## Claims

1. Shift device having a shift rod (1) and having a shift fork (2), wherein the shift rod (1) is arranged in an orifice (3) of the shift fork (2) and an intermediate space remains between the shift rod (1) and the shift fork (2), **characterized in that** a plurality of spacers (4, 5) is arranged in the intermediate space, which spacers have articulating planar surfaces (4a, 5a) for generating areal contact with the shift rod (1).

2. Shift device according to Claim 1, **characterized in that** the shift rod (1) has articulating flattened portions (12, 13).

3. Shift device according to Claim 1, **characterized in that** the spacers (4, 5) have the largest dimension in the longitudinal direction of the shift rod (1).

4. Shift device according to Claim 1, **characterized in that** the spacers (4, 5) increase the size of the circumference of the shift rod (1).

5. Shift device according to Claim 1, **characterized in that** the shift fork (2) has a circumferentially completely closed orifice (3).

6. Shift device according to Claim 1, **characterized in that** a pin extends through the shift rod (1), the shift fork (2) and spacers (4, 5).

7. Shift device according to Claim 1, **characterized in that** the spacers (4, 5) are arranged symmetrically on the shift rod (1).

8. Shift device according to Claim 1, **characterized in that** the spacers (4, 5) are identical.

9. Shift device according to Claim 1, **characterized in that** the planar surfaces (4a, 5a) of the spacers (4, 5) are plane-parallel with respect to one another.

10. Shift device according to Claim 1, **characterized in that** the shift fork (2) is arranged in an axially movable manner on the shift rod (1).

11. Shift device according to Claim 1, **characterized in that**, in order to maximize the contact area between the shift fork (2) and the spacers (4, 5), a curvature of a domed surface (4c, 5c) of the spacer (4, 5) and a curvature of the orifice (3) are of equal size.

## Revendications

1. Dispositif de changement de vitesses comprenant une tige de commutation (1) et une fourchette de changement de vitesses (2), la tige de commutation (1) étant disposée dans une ouverture (3) de la fourchette de changement de vitesses (2) et un espace intermédiaire subsistant entre la tige de commutation (1) et la fourchette de changement de vitesses (2), **caractérisé en ce que** plusieurs éléments d'espacement (4, 5) sont disposés dans l'espace intermédiaire, lesquels présentent des surfaces planes (4a, 5a) agissant de manière articulée pour créer un contact superficiel avec la tige de commutation (1).

2. Dispositif de changement de vitesses selon la revendication 1, **caractérisé en ce que** la tige de commutation (1) présente des méplats (12, 13) agissant de manière articulée.

3. Dispositif de changement de vitesses selon la revendication 1, **caractérisé en ce que** les éléments d'espacement (4, 5) présentent dans la direction longitudinale de la tige de commutation (1) la plus grande dimension.

4. Dispositif de changement de vitesses selon la revendication 1, **caractérisé en ce que** les éléments d'espacement (4, 5) augmentent la périphérie de la tige de commutation (1).

5. Dispositif de changement de vitesses selon la revendication 1, **caractérisé en ce que** la fourchette de changement de vitesses (2) présente une ouverture (2) fermée complètement du côté de la périphérie.

6. Dispositif de commutation selon la revendication 1, **caractérisé en ce que** la tige de commutation (1), la fourchette de changement de vitesses (2) et les éléments d'espacement (4, 5) sont traversés par une broche.

7. Dispositif de changement de vitesses selon la revendication 1, **caractérisé en ce que** les éléments d'espacement (4, 5) sont disposés symétriquement sur la tige de commutation (1).

8. Dispositif de changement de vitesses selon la revendication 1, **caractérisé en ce que** les éléments d'espacement (4, 5) sont identiques.

9. Dispositif de changement de vitesses selon la revendication 1, **caractérisé en ce que** les surfaces planes (4a, 5a) des éléments d'espacement (4, 5) sont disposés avec leurs plans parallèles.

10. Dispositif de changement de vitesses selon la revendication 1, **caractérisé en ce que** la fourchette de changement de vitesses (2) est disposée de manière déplaçable axialement sur la tige de commutation (1).

11. Dispositif de changement de vitesses selon la revendication 1, **caractérisé en ce que** pour maximiser la surface de contact entre la fourchette de changement de vitesse (2) et les éléments d'espacement (4, 5), une courbure d'une surface courbe (4c, 5c) de l'élément d'espacement (4, 5) et une courbure de l'ouverture (3) sont identiques.
